# EUROPEAN PATENT SPECIFICATION

(11) **EP 2 229 228 B1**
(45) Date of publication and mention of the grant of the patent: **16.07.2014**
(21) Application number: 09702240.4
(22) Date of filing: 13.01.2009
(51) Int. Cl.: A63J 17/00

(54) **SYSTEM AND METHOD FOR AUTOMATICALLY CREATING AN ATMOSPHERE SUITED TO SOCIAL SETTING AND MOOD IN AN ENVIRONMENT**
SYSTEM UND VERFAHREN ZUR AUTOMATISCHEN HERSTELLUNG EINER AN DIE SOZIALE EINSTELLUNG UND DIE STIMMUNG EINER BESTIMMTEN UMGEBUNG ANGEPASSTEN ATMOSPHÄRE
SYSTÈME ET PROCÉDÉ PERMETTANT DE CRÉER AUTOMATIQUEMENT UNE ATMOSPHÈRE ADAPTÉE AU CONTEXTE SOCIAL ET À L'AMBIANCE DANS UN ENVIRONNEMENT

(30) Priority: 16.01.2008 EP 08100563
(43) Date of publication of application: 22.09.2010
(73) Proprietor: Koninklijke Philips N.V., 5656 AE Eindhoven (NL)
(72) Inventor: VAN DE SLUIS, Bartel, M., NL-5656 AE Eindhoven (NL); AARTS, Ronaldus, M., NL-5656 AE Eindhoven (NL)
(74) Representative: Bekkers, Joost J.J.
(86) International application number: PCT/IB2009/050120
(87) International publication number: WO 2009/090600

(56) References cited:
- WO-A-03/101098
- US-A1- 2006 137 510
- US-B1- 7 065 219

## Description

### FIELD OF THE INVENTION

The invention relates to the automatic creation of an atmosphere such as a lighting atmosphere combined with music, which is suited to social setting and mood in an environment such as a room.

### BACKGROUND OF THE INVENTION

Future atmosphere creation systems will provide integral control of multiple atmosphere modalities including advanced lighting, audio playback, the content of electronic displays and possibly even smells, thus allowing creating complex atmospheres in an environment such as a home, retail or hospitality environment. Studies have shown that people have an increased need for scene setting and atmosphere creation. Especially for social events people appreciate a stimulating atmosphere, which fits the mood and state of the social setting at a particular moment. An important problem to be solved is how people can easily control an atmosphere creation system and can adjust the atmosphere to the current social setting, social activities and mood.

US 7,065,219 B1 discloses a headphone section having microphone elements for detecting a sound around the user and signal acoustic transducing elements which function as a sound source for canceling the sound around the user, the microphone elements and acoustic transducer elements housed in the headphone boxes. Further, a control circuit section independent from the headphone section is intended to control at least the frequency characteristics and the gain characteristics of the audio signal from the microphone element of the headphone section, to generate a signal that can serve as a sound source for canceling the surrounding sound, and to supply the signal to the signal acoustic transducing element of the headphone section.

### SUMMARY OF THE INVENTION

It is an object of the present invention to provide a novel system and method, which allow to automatically creating an atmosphere suited to social setting and mood in an environment.

The object is solved by the independent claims. Further embodiments are shown by the dependent claims.

A basic idea of the invention is to automatically create an atmosphere with an atmosphere creation system based on audio analysis of sound in an environment. Sound in an environment such as a bar, disco, shop etcetera may be an indicator for the current social setting and mood in the environment, for example laughing usually corresponds with a happy social setting and mood. Social setting and mood also comprises music in an environment, so that music may also influence the automatically created atmosphere according to the invention. For example, people usually expect a different lighting for popular music than for classical music. The invention provides the advantage that users must not take care of creating and adjusting an atmosphere, for example a lighting atmosphere automatically created with a complex lighting system, depending on the social setting and mood in an environment such as a shop, bar etcetera. It should be noted that in the context of the present invention an atmosphere in an environment comprises different aspects such as lighting, sound, pictures, smells, and temperature. Thus, the automatic creation of an atmosphere according to the invention comprises the automatic control of all technical means for influencing the atmosphere in an environment such as a lighting system or light units, a sound creation system, smell generators, electronic picture displays, and climate control systems.

An embodiment of the invention provides a system for automatically creating an atmosphere suited to social setting and mood in an environment, comprising
- a sound receiving unit being adapted for receiving sound from the environment and generating an audio signal representing the received sound,
- an audio signal processing unit being adapted for receiving and analyzing the audio signal for social setting and mood in the environment, and
- an atmosphere creation unit being adapted for automatically generating control signals for an atmosphere creation system for creating an atmosphere based on the result of the analysis of the audio signal.

This system allows a comfortable and automatic creation of an atmosphere, which is suited to social setting and mood in an environment, for example in a room. It may not require any user interaction and, thus, may disburden users from the complex task of creating and adjusting a suitable atmosphere, which often requires expert knowledge. The system may be implemented for example as a module to be integrated in an atmosphere creation system or as a standalone unit, which may be coupled with an atmosphere creation system, particularly with a control signal interface of the atmosphere creation system for receiving the generated control signals and processing them internally in order to create the atmosphere suited to social setting and mood in the environment.

According to a further embodiment of the invention, the audio signal processing unit may comprise an audio content analysis and classification unit being adapted for analyzing the audio content contained in the received audio signal and for classifying the analyzed audio content. The classification of audio content, for example into music such as popular or classical music, noise or crowd noise, and silence may serve in most cases as a reliable and suitable basis for differing between various social settings and moods in the environment.

The audio content analysis and classification unit may comprise in a further embodiment of the invention a feature extraction and audio classification algorithm being adapted for classifying the audio content into at least one or more of the following general audio classes: popular music; classical music; speech; noise; crowd noise; silence; laughter. Such an algorithm may be implemented either in soft- or in hardware. The algorithm allows extracting features from the audio content, which are specific for different audio classes. The extracted features may then be processed to assign the audio content to a general audio class.

In a further embodiment of the invention, the feature extraction and audio classification algorithm may be further adapted for refining a classification by further classifying a general audio class into subclasses. For example, the algorithm can perform a more specific analysis of audio content, which is classified in a first step as popular music, in order to determine whether the music is Jazz, Rock, Reggae, Folk, R&B etcetera. This may help to better adapt an automatically created atmosphere to the social setting and mood in an environment.

The audio content analysis and classification unit may be in an embodiment of the invention further adapted for analyzing the audio content for presence information and/or verbal expressions and to classify the social mood in the environment based on the analyzed presence information and/or verbal expressions. For example, the audio content may be analyzed for laughter or speech or certain words such as control commands, spoken by a user. The latter allows to selectively create a certain atmosphere by a user, for example when the user speaks with a loud voice and uses a control command such as "cold atmosphere", the system may receive and analyze this user spoken command and automatically create a "cold" atmosphere by for example controlling a lighting system to create a blue lighting, and an air conditioning system to cool down the temperature in a room.

According to a further embodiment, the atmosphere creation unit may be further adapted for mapping the classified social mood to an atmosphere, which fits the classified social mood, by means of a look-up table containing mood classes matched to atmosphere properties and atmosphere content, such as for example music, images, video. For example, the system may contain a complex look-up table in a storage, particularly in the form of a database. When the system classifies a social mood, it may then automatically perform a database query with the classified social mood as input parameter and receive from the database as output a set of control parameters for a lighting system in order to create a lighting atmosphere fitting the classified social mood. The look-up table may be created and updated by a user or automatically by for example downloading updates over a network, such as the internet.

In a further embodiment of the invention, the atmosphere creation unit may be further adapted for automatically creating an atmosphere by controlling one or more of the following systems: a lighting system for generating a lighting atmosphere; an audio rendering system for generating audio, for example playback of a soundscape, music track or playlist i.e. ordered set of music tracks; an electronic display system for displaying electronic pictures and videos; a smell generation system for generating artificial smells; a climate control system.

According to a further embodiment of the invention, the atmosphere creation unit may be further adapted for adapting an atmosphere to dynamics of the sound received with the sound receiving unit. This allows implementing the creation of a dynamic atmosphere in the environment. For example, the system may automatically change the created atmosphere when the loudness of talking in a room increases by slightly increasing the lighting intensity. Also, the system may for example create specific colors depending on the persons, who are talking. This may be helpful for example during conferences, when different persons are speaking. In such an application, the system may automatically change for example the color of a spotlight highlighting a speaker, who actually speaks, so that listeners may more easily distinguish the different speakers.

According to a further embodiment of the invention,
- the sound receiving unit may be further adapted for receiving sounds from different locations in the environment and for generating audio signals representing the sounds received from the different locations,
- the audio signal processing unit may be further adapted for receiving and analyzing the audio signals for social settings at the different locations in the environment, and
- the atmosphere creation unit may be further adapted for automatically generating control signals for an atmosphere creation system for creating different atmospheres at the different locations in the environment based on the result of the analysis of the different audio signals representing the sounds received from the different locations.

This allows adapting the automatically created atmosphere better to different locations in the environment in contrast to the creation of one atmosphere for an environment, since the entire sound in the environment is received and processed. This embodiment enables the creation of localized atmospheres, for example a first atmosphere in a first location, where a first person speaks for which the first atmosphere is suitable, and a second atmosphere in a second location, where a second person speaks for which the second atmosphere is suitable.

The system may comprise according to a further embodiment of the invention
- a sensor for detecting human presence in a location of the environment and
- a sensor signal processing unit being adapted for determining a measure for human presence in the sensed location, wherein
- the atmosphere creation unit is further adapted for automatically generating control signals for an atmosphere creation system for creating the atmosphere based on the determined measure for human presence.

These additional sensor inputs to the system may help to improve the performance of the detection of social setting and mood, other sensors may provide supporting input. For instance, infra-red sensors and computer-vision enabled cameras may improve the detection of human presence, number of people and social setting.

According to a further embodiment of the invention, the system may further comprise - an user interface being adapted for receiving an user input for enabling an automatic mode of the system in order to evoke an automatic atmosphere adjustment behavior of the system.

Thus a user can easily activate a mode of an atmosphere creation system automatic creation and adjustment of an atmosphere, which suits to the social setting and mood in the environment.

The user interface may be in a further embodiment of the invention adapted for receiving an user input for adjusting specific properties of the automatic atmosphere adjustment behavior of the system, such as the desired amount of variation (to what extent the atmosphere is adjusted to a social setting and mood) or the desired dynamics (from gradual changes over time to dynamically adjusting every minute.

The system may also be further adapted according to an embodiment of the invention for receiving a predefined input, for example via the user interface or as signal or as predefined sound, and selecting a predefined atmosphere corresponding to the received predefined input and for generating corresponding control signals for the atmosphere creation system in order to create the predefined atmosphere. This allows overruling the system's automatic, by some fixed settings, or personal preference settings. For example, a user may quickly select a predefined setting such as "dimmed warm lighting" in case of a lighting system by inputting the predefined input via the user interface by pressing a "preference selection button", by speaking out a specific command such as "user preferred settings" or by using a technical input means such as an electronic key, which sends out a specific code upon pressing a button of the key. Also, a characteristic sound may serve as predefined input, for example the sound of vacuum cleaning. Thus, a maid is cleaning a room, in which the system is installed for controlling a lighting system, the system may receive the sound of vacuum cleaning as predefined input and automatically select a predefined atmosphere "good light condition for cleaning". Thus, the processing of the predefined input may be in case of sound also performed with the an audio signal processing unit. When the predefined input is received from the user interface or via a communication connection for example with an electronic key, it may be also processed by another input processing unit, which may directly control the atmosphere creation unit.

According to a further embodiment of the invention, the system may be further adapted for receiving signals from personal identification means such as tags, for example built into a wrist or a jewel, and for taking the received signals into consideration when creating the atmosphere. This allows to more precisely distinguish between persons, for example not only to detect a person, but also to detect who a detected person is, provided that the system either receives with the signals from the identification means information about the person or may identify a person by means of the received signals, for example when the signals contain an identification code of a person, the system may access a database containing information about people retrievable with the identification code.

Furthermore, an embodiment of the invention provides a method for automatically creating an atmosphere suited to social setting and mood in an environment, comprising
- receiving sound from the environment and generating an audio signal representing the received sound,
- receiving and analyzing the audio signal for social settings in the environment, and
- automatically generating control signals for an atmosphere creation system for creating an atmosphere based on the result of the analysis of the audio signal.

This method may be implemented as an algorithm, which may be for example stored in a memory and executed by a processor, for example a digital signal processor, which is programmed for audio signal analysis.

According to a further embodiment of the invention, a computer program may be provided, which is enabled to carry out the above method according to the invention when executed by a computer. Thus, the method according to the invention may be applied for example to existing atmosphere creation systems, particularly lighting systems, which may be extended with novel functionality and are adapted to execute computer programs, provided for example over a download connection or via a record carrier.

According to a further embodiment of the invention, a record carrier storing a computer program according to the invention may be provided, for example a CD-ROM, a DVD, a memory card, a diskette, or a similar data carrier suitable to store the computer program for electronic access.

Finally, an embodiment of the invention provides a computer programmed to perform a method according to the invention and comprising sound receiving means such as a microphone, connected to a sound card of the computer, and an interface for communication with an atmosphere creation system for creating an atmosphere. The computer may be for example a Personal Computer (PC) adapted to control a atmosphere creation system, to generate control signals in accordance with the automatically created atmosphere and to transmit the control signals over the interface to the atmosphere creation system.

These and other aspects of the invention will be apparent from and elucidated with reference to the embodiments described hereinafter.

### BRIEF DESCRIPTION OF THE DRAWINGS

The invention will be described in more detail hereinafter with reference to exemplary embodiments. However, the invention is not limited to these exemplary embodiments.
- Fig. 1: shows an embodiment of a system for automatically creating an atmosphere suited to social setting and mood in an environment according to the invention; and
- Fig. 2: shows an embodiment of an audio signal processing unit of the system shown in Fig. 1;
- Fig. 3: shows an embodiment of an atmosphere creation unit of the system shown in Fig. 1; and
- Fig. 4: shows an embodiment of a look-up table implemented in the atmosphere creation unit shown in Fig. 3.

### DETAILED DESCRIPTION OF EMBODIMENTS

In the following, functionally similar or identical elements may have the same reference numerals.

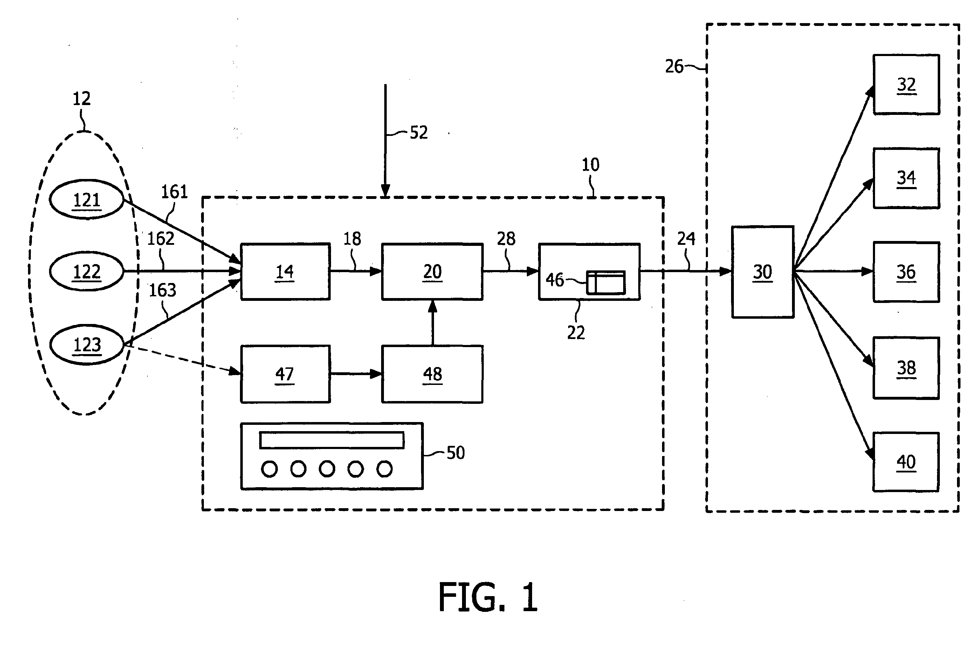

Fig. 1 shows an atmosphere creation system 26, which is able to automatically respond to specific social contexts and activities and adjust the atmosphere created in an environment 12 accordingly. A system 10 for automatically creating the atmosphere suited to social setting and mood in the environment 12 according to the invention controls the atmosphere creation system 26 by means of control signals 24, which may be transmitted from the system 10 to the atmosphere creation system 26 either by a wired or a wireless communication link.

The environment 12 may be for example a room in a building, in which the atmosphere creation system 26 is installed for creating a desired atmosphere in the room. In order to accomplish this, the atmosphere creation system 26 may comprise a lighting system 32, an audio rendering system 34, an electronic display system 36 for displaying electronic pictures and videos, a smell generation system 38 for generating artificial smells, and/or an air conditioning system 40. The lighting system 32 may be a complex lighting system comprising several solid state lighting units and adapted to create lighting with different hues, saturations, and brightness at different locations 121, 122, 123 in the room 12. An example for such a lighting system is the LivingColors^{™} lamp of the applicant, which allows adjusting the hue, saturation and brightness of the created lighting atmosphere by means of a radio remote control unit. The audio rendering system 34 may be a multi channel audio system, which is able to create a surround music soundscape. The created soundscape may be loaded from a storage such as a hard disk, particularly over a network connection. The electronic display system 36 may comprise one or more flat panel displays such as LCD or Plasma display panels, which may be supplied from a video source such as a computer or video player with digital photo or video data. The smell generation system 38 may comprise multiple smells such as perfumes, which may be computer controlled dispersed. The air conditioning system 40 may be a computer controlled heating and ventilation system installed in the room 12. All systems 32 to 40 are controlled by a atmosphere creation controller 30, which may be implemented by a computer, which is configured to process control signals 24 received from the system 10 and to control the different systems 32 to 40 in such a way that the atmosphere in the room 12, as represented by the control signals, is created.

The system 10 comprises a sound receiving unit 14, which may comprise an array of microphones positioned at different locations 121, 122, 123 in the room 12 and an analog to digital converter unit for converting the analog electrical signals from the microphones into digital audio signals 18. The sound receiving unit 14 may also comprise some sound signal filtering and processing means, such as analog or digital filters and amplifiers, in order to cancel sound portions, which are not required for the further sound processing. The audio signals 18 are output to an audio signal processing unit 20 for further processing. The audio signal processing unit 20 analyzes the received audio signals for social setting and mood in the room 12, as will be described later in more detail. The result of the analysis is output as signal 28 to an atmosphere creation unit 22 of the system 10. The atmosphere creation unit 22 generates the control signals 24 for the atmosphere creation system 26 on the basis of the received signal 28 containing the analysis result. The process of generating the control signals 24 is also described later in more detail. The system 10 further comprises a sensor 47, for example an infra-red sensor or a computer-vision enabled camera, which senses the human presence at the location 123 of the room 12 and may be positioned in or near the location 123. The signal from this sensor 47 is output to a sensor signal processing unit 48, which processes from the received signal a measure for the human presence in the sensed location 123. This measure is forward from the signal processing unit 48 to the audio signal processing unit 20 for further processing and improving the performance of detecting a social setting.

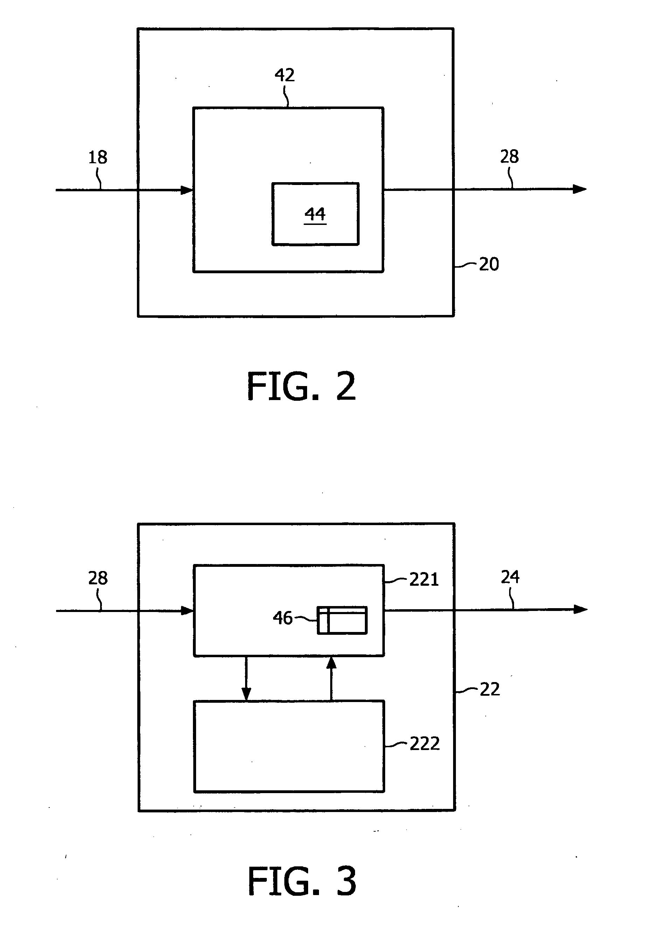

Fig. 2 shows the audio signal processing unit 20 in more detail. The unit 20 comprises an audio content analysis and classification unit 42 for analyzing and classifying the audio signal 18. Particularly two types of information can be gathered from the audio analysis, which allow assessing the social setting and mood in a room: presence information for detecting the social setting in the room, such as number and type of people present in the room, estimation of gender and age of the people talking; verbal expressions for detecting the social mood in the room, such as the loudness of talking, speed of talking, way of talking (whisper, talk, scream, sing, hum), emotions (happy, angry, sad, etc). Additionally, (live) music, being played, may be detected and classified for creating and adjusting an atmosphere.

In order to perform the analysis and classification, the audio content analysis and classification unit 42 executes a feature extraction and audio classification algorithm 44 on the audio signal 18. With the algorithm 44, the audio signal processing unit 20 extracts characteristic features from the audio content of each received audio signal 18, which are then used for classifying the audio content of each audio signal. The algorithm may execute a two-step analyzing and classification process. In a first step, an audio content may be classified into one of general audio classes like popular music, classical music, speech, noise, crowd noise, silence, and laughter by extracting and analyzing features from the audio content, which are characteristic for the general audio classes. The first step allows to coarsely classifying the audio content. Then, in a second step the algorithm may refine the coarse classification by further extracting and analyzing features from the audio content., For example, the algorithm may further analyze an audio content, classified during the first step as popular music, by doing a more specific analysis of the audio content to determine whether the audio content is Jazz, Rock, Reggae, Folk, R&B etcetera. As result, the classification is output as signal 28 to the atmosphere creation unit 22.

The audio signal processing unit 20 receives also an additional input from the sensor signal processing means 48, which may improve the detecting of the social setting in the room. For example, a social setting such as number and type of people in the room, detected through an analysis and classification of the audio content of the audio signal 18 may be verified by the received additional input from the sensor signal processing means 48, which is a measure for the number people, present in the room. Or the additional input may be used to detect the number and type of people at a certain location 121, 122, 123 in the room 12, which may be too time-consuming or costly in computing power, when this should be detected from the audio content.

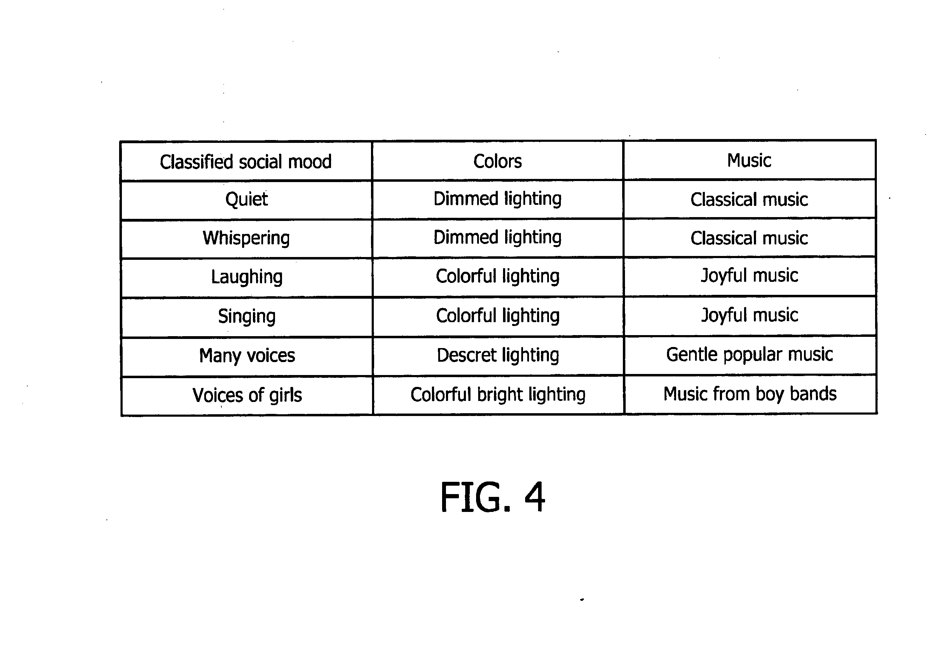

Fig. 3 shows the atmosphere creation unit 22 in more detail. The atmosphere creation unit needs to have knowledge about what type atmosphere properties or atmosphere content ingredients fit a particular social mood. This knowledge is implemented in the atmosphere creation unit 22 by means of a translation unit 221 and an atmosphere content access unit 222. The translation unit 221 is adapted to translate a received classification result into atmosphere properties and comprises a look-up table 46 in which the mood classes are matched to colors, as shown exemplary in Fig. 4. The same can be done for musical content for which metadata (services) exist indicating the music genre, for instance, a quiet mood can be matched to classical music, and a girly mood with music from boy bands, refer to the third column of the exemplary look-up table of Fig. 4. The atmosphere properties are transmitted to the atmosphere content access unit 222, which acquires atmosphere content, particularly control sets for controlling the various systems 32 to 40 of the atmosphere creation system 26 in order to create the corresponding atmosphere, particularly from a database, which contains a number of different atmospheres suitable for the atmosphere creation system 26. The atmosphere content access unit 222 transmits the acquired atmosphere content to the translation unit 221, which generates control signals 24 corresponding to the received atmosphere content and outputs these signals 24 to the atmosphere creation system 26.

In summary, the system 10 works in practice as explained in the following by means of typical examples: based on the audio-analysis based social mood classification, control signals for an atmosphere creation system are created so that an atmosphere is automatically created, which fits the social settings in an environment. For example if a few people are whispering for some time, the system 10 could automatically create a quiet or mystical environment. For instance, by dimming the light, playback of mystical music or "ppssst"-sounds, and showing images of dark faces and eyes on TV or Photo frame displays. In the case of a happy atmosphere, when people are singing or laughing loudly the system 10 could create an environmental and colorful atmosphere that suits this happiness, including the playback of joyful music, and possibly presenting images of smiling or even funny faces (which may come from a personal or family photo collection). If many voices are detected the system 10 may interpret this as a party or reception and create appropriate lighting settings. From a user point of view, it is important that all these changes should be subtle and unobtrusive. In these examples the dynamic atmosphere should enhance the social interaction; it should not distract the people from their social activities. When singing is detected, the system could generate a choir of people humming along, or show an audience on the displays which would cheer and give applause at the end of the song.

As shown in Fig. 1, the system 10 can process several sounds 161, 162, 163 received from different locations 121, 122, and 123, respectively, of the room 12. This allows creating different atmospheres at the different locations 121, 122, 123, i.e. localized atmospheres, based on the audio analysis and classification of the different sounds 161, 162, 163. For example, the system 10 may create a particular color when person A is talking, and generate a different color when person B is talking. Using a microphone array or other means, it is possible to localize people, and create localized atmospheres. For instance, the person laughing the most or loudest can be given a colorful local aura.

The system 10 may also be adapted to generate a dynamic atmosphere based on the sounds 161, 162, 163 in the environment 12. For instance, if people are talking in the room, the system can not only activate 'talking settings', but it may also instantly adapt one or more atmosphere parameters to properties of the talking. For instance, when the loudness of talking increases, the light intensity may increase slightly.

The functionality proposed in the present invention may be accessible to the user as a mode, for instance, the user can put an atmosphere creation system, for example a lighting system on 'automatic' in order to evoke the automatic lighting adjustment behavior. In addition, a user may be able to adjust specific properties of the automatic lighting adjustment behavior, such as the desired amount of variation (to what extent the atmosphere is adjusted to a social setting and mood) or the desired dynamics (from gradual changes over time to dynamically adjusting every minute).

Briefly summarized, the invention proposes to analyze an audio signal (as picked up by one or multiple microphones) for features indicating information on the social setting (number and type of people present) and on the social mood (properties of verbal expressions such as loudness, speed, way of talking, duration of silences, emotions etc.). Based on these aspects the social setting and social mood are being classified, and an atmosphere creation system may create an atmosphere based on the classified "social mood". If necessary, specific atmosphere content such as music or images may be acquired (e.g. from a user's collection, or downloaded).

At least some of the functionality of the invention may be performed by hard- or software. In case of an implementation in software, a single or multiple standard microprocessors or microcontrollers may be used to process a single or multiple algorithms implementing the invention.

It should be noted that the word "comprise" does not exclude other elements or steps, and that the word "a" or "an" does not exclude a plurality. Furthermore, any reference signs in the claims shall not be construed as limiting the scope of the invention.

## Claims

1. System (10) for automatically creating an atmosphere suited to social setting and mood in an environment (12), comprising
- a sound receiving unit (14) being adapted for receiving sound (161, 162, 163) from the environment (12) and generating an audio signal (18) representing the received sound,
- an audio signal processing unit (20) being adapted for receiving and analyzing the audio signal (18) for social setting and mood in the environment (12), and
- an atmosphere creation unit (22) being adapted for automatically generating control signals (24) for an atmosphere creation system (26) for creating an atmosphere based on the result (28) of the analysis of the audio signal (18),
**characterized in that** the atmosphere creation unit (22) is further adapted for automatically creating a lighting atmosphere by generating control signals (24) for the atmosphere creation system (26) controlling a lighting system (32).

2. The system of claim 1, wherein the audio signal processing unit (20) comprises an audio content analysis and classification unit (42) being adapted for analyzing the audio content contained in the received audio signal (18) and for classifying the analyzed audio content.

3. The system of claim 2, wherein the audio content analysis and classification unit (42) comprises a feature extraction and audio classification algorithm (44) being adapted for classifying the audio content into at least one or more of the following general audio classes: popular music; classical music; speech; noise; crowd noise; silence; laughter,
wherein the feature extraction and audio classification algorithm (44) is particularly further adapted for refining a classification by further classifying a general audio class into subclasses.

4. The system of any of claims 2 to 3, wherein the audio content analysis and classification unit (42) is further adapted for analyzing the audio content for presence information and/or verbal expressions and to classify the social mood in the environment based on the analyzed presence information and/or verbal expressions,
wherein the atmosphere creation unit (22) is particularly further adapted for mapping the classified social mood to an atmosphere, which fits the classified social mood, by means of a look-up table (46) containing mood classes matched to atmosphere properties and atmosphere content.

5. The system of any of the preceding claims, wherein the atmosphere creation unit (22) is further adapted for automatically creating an atmosphere by generating control signals (24) for the atmosphere creation system (26) controlling one or more of the following systems: an audio rendering system (34) for generating audio; an electronic display system (36) for displaying electronic pictures and videos; a smell generation system (38) for generating artificial smells; a climate control system (40).

6. The system of any of the preceding claims, wherein the atmosphere creation unit (22) is further adapted for adapting an atmosphere to dynamics of the sound (161, 162, 163) received with the sound receiving unit (14).

7. The system of any of the preceding claims, wherein
- the sound receiving unit (14) is further adapted for receiving sounds (161, 162, 163) from different locations (121, 122, 123) in the environment (12) and for generating audio signals (18) representing the sounds (161, 162, 163) received from the different locations (121, 122, 123),
- the audio signal processing unit (20) is further adapted for receiving and analyzing the audio signals (18) for social setting and mood at the different locations (121, 122, 123) in the environment, and
- the atmosphere creation unit (22) is further adapted for automatically generating control signals (24) for an atmosphere creation system (26) for creating different atmospheres at the different locations (121, 122, 123) in the environment based on the result of the analysis of the different audio signals (18) representing the sounds (161, 162, 163) received from the different locations (121, 122, 123).

8. The system of any of the preceding claims, further comprising
- a sensor (47) for detecting human presence in a location (123) of the environment (12) and
- a sensor signal processing unit (48) being adapted for determining a measure for human presence in the sensed location (123), wherein
- the atmosphere creation unit (22) is further adapted for automatically generating control signals (24) for an atmosphere creation system (26) for creating the atmosphere based on the determined measure for human presence.

9. The system of any of the preceding claims, further comprising
- an user interface (50) being adapted for receiving an user input for enabling an automatic mode of the system (10) in order to evoke an automatic atmosphere adjustment behavior of the system (10),
wherein the user interface (50) is particularly further adapted for receiving an user input for adjusting specific properties of the automatic atmosphere adjustment behavior of the system (10).

10. The system of any of the preceding claims, being further adapted for receiving a predefined input and selecting a predefined atmosphere corresponding to the received predefined input and for generating corresponding control signals (24) for the atmosphere creation system (26) in order to create the predefined atmosphere.

11. The system of any of the preceding claims, being further adapted for receiving signals (52) from personal identification means (54) and for taking the received signals (52) into consideration when creating the atmosphere.

12. Method for automatically creating an atmosphere suited to social setting and mood in an environment, comprising
- receiving sound (161, 162, 163) from the environment (12) and generating an audio signal (18) representing the received sound,
- receiving and analyzing the audio signal (18) for social setting and mood in the environment (12), and
- automatically generating control signals (24) for an atmosphere creation system (26) for creating an atmosphere based on the result of the analysis of the audio signal (18)
**characterized in that** the step of automatically generating control signals (24) for the atmosphere creation system comprises generating control signals (24) for controlling a lighting system (32) for generating a lighting atmosphere.

13. A computer program enabled to carry out the method according to claim 12 when executed by a computer.

14. A record carrier storing a computer program according to claim 13.

15. A computer programmed to perform a method according to claim 12 and comprising an interface for communication with an atmosphere creation system.

## Patentansprüche

1. System (10) zur automatischen Erzeugung einer für die soziale Situation und Stimmung in einer Umgebung (12) geeigneten Atmosphäre, mit:
- einer Tonempfangseinheit (14), die so eingerichtet ist, dass sie einen Ton (161, 162, 163) aus der Umgebung (12) empfängt und ein den empfangenen Ton repräsentierendes Audiosignal (18) erzeugt,
- einer Audiosignalverarbeitungseinheit (20), die so eingerichtet ist, dass sie das Audiosignal (18) empfängt und für die soziale Situation und Stimmung in der Umgebung (12) analysiert; sowie
- einer Atmosphärenerzeugungseinheit (22), die so eingerichtet ist, dass sie Steuersignale (24) für ein Atmosphärenerzeugungssystem (26) zur Erzeugung einer auf dem Ergebnis (28) der Analyse des Audiosignals (18) basierenden Atmosphäre automatisch erzeugt,
**dadurch gekennzeichnet, dass** die Atmosphärenerzeugungseinheit (22) weiterhin so eingerichtet ist, dass sie durch Erzeugen von Steuersignalen (24) für das ein Beleuchtungssystem (32) steuernde Atmosphärenerzeugungssystem (26) eine Beleuchtungsatmosphäre automatisch erzeugt.

2. System nach Anspruch 1, wobei die Audiosignalverarbeitungseinheit (20) eine Audioinhaltsanalyse- und Klassifizierungseinheit (42) umfasst, die so eingerichtet ist, dass sie den in dem empfangenen Audiosignal (18) enthaltenen Audioinhalt analysiert und den analysierten Audioinhalt klassifiziert.

3. System nach Anspruch 2, wobei die Audioinhaltsanalyse- und Klassifizierungseinheit (42) einen Merkmalextrahierungs- und Audioklassifizierungsalgorithmus (44) umfasst, der so vorgesehen ist, dass er den Audioinhalt in mindestens eine oder mehrere der folgenden allgemeinen Audioklassen klassifiziert: Unterhaltungsmusik; klassische Musik; Sprache; Geräusch; Lärm; Stille; Gelächter,
wobei der Merkmalextrahierungs- und Audioklassifizierungsalgorithmus (44) im Einzelnen weiterhin so angepasst ist, dass er eine Klassifizierung durch weiteres Klassifizieren einer allgemeinen Audioklasse in Unterklassen verfeinert.

4. System nach den Ansprüche 2 bis 3, wobei die Audioinhaltsanalyse- und Klassifizierungseinheit (42) weiterhin so eingerichtet ist, dass sie den Audioinhalt auf Präsenzinformationen und/oder verbale Ausdrücke analysiert und die soziale Stimmung in der Umgebung aufgrund der analysierten Präsenzinformationen und/oder verbalen Ausdrücken klassifiziert,
wobei die Atmosphärenerzeugungseinheit (22) im Einzelnen weiterhin so eingerichtet ist, dass sie mit Hilfe einer Zuordnungstabelle, die auf Atmosphäreneigenschaften und Atmosphäreinhalt abgestimmte Stimmungsklassen enthält, die klassifizierte soziale Stimmung einer Atmosphäre zuordnet, die zu der klassifizierten sozialen Stimmung passt.

5. System nach einem der vorangegangenen Ansprüche, wobei die Atmosphärenerzeugungseinheit (22) weiterhin so eingerichtet ist, dass diese eine Atmosphäre automatisch erzeugt, indem sie Steuersignale (24) für das Atmosphärenerzeugungssystem (26) zur Steuerung eines oder mehrerer der folgenden Systeme erzeugt: eines Audiowiedergabesystems (34) zur Audioerzeugung; eines elektronischen Anzeigesystems (36) zur Darstellung elektronischer Bilder und Videos; eines Dufterzeugungssystems (38) zur Erzeugung künstlicher Düfte; eines Klimaregelungssystems (40).

6. System nach einem der vorangegangenen Ansprüche, wobei die Atmosphärenerzeugungseinheit (22) weiterhin so eingerichtet ist, dass sie eine Atmosphäre an die Dynamik des mit der Tonempfangseinheit (14) empfangenen Tons (161, 162, 163) anpasst.

7. System nach einem der vorangegangenen Ansprüche, wobei
- die Tonempfangseinheit (14) weiterhin so eingerichtet ist, dass sie Töne (161, 162, 163) von verschiedenen Orten (121, 122, 123) in der Umgebung empfängt und Audiosignale (18) erzeugt, welche die von den verschiedenen Orten (121, 122, 123) empfangenen Töne repräsentieren,
- die Audiosignalverarbeitungseinheit (20) weiterhin so eingerichtet ist, dass sie die Audiosignale empfängt und für die soziale Situation und Stimmung an den verschiedenen Orten (121, 122, 123) in der Umgebung analysiert; und
- die Atmosphärenerzeugungseinheit (22) weiterhin so eingerichtet ist, dass sie aufgrund des Ergebnisses der Analyse der die von den verschiedenen Orten (121, 122, 123) empfangenen Töne (161, 162, 163) repräsentierenden verschiedenen Audiosignale (18) Steuersignale (24) für ein Atmosphärenerzeugungssystem (26) zur Erzeugung verschiedener Atmosphären an den verschiedenen Orten (121, 122, 123) in der Umgebung automatisch erzeugt.

8. System nach einem der vorangegangenen Ansprüche, das weiterhin umfasst:
- einen Sensor (47) zum Detektieren der Anwesenheit von Menschen an einem Ort (123) der Umgebung (12) sowie
- eine Sensorsignalverarbeitungseinheit (48), die so eingerichtet ist, dass sie eine Messung für die Anwesenheit von Menschen in der abgetasteten Position (123) vornimmt, wobei
- die Atmosphärenerzeugungseinheit (22) weiterhin so eingerichtet ist, dass sie Steuersignale (24) für ein Atmosphärenerzeugungssystem (26) automatisch erzeugt, um aufgrund der vorgenommenen Messung für die Anwesenheit von Menschen die Atmosphäre zu erzeugen.

9. System nach einem der vorangegangenen Ansprüche, das weiterhin umfasst:
- eine Benutzerschnittstelle (50), die so eingerichtet ist, dass sie eine Benutzereingabe zum Ermöglichen eines Automatikbetriebs des Systems (10) empfängt, um ein automatisches Atmosphärenanpassungsverhalten des Systems (10) zu bewirken,
wobei die Benutzerschnittstelle (50) im Einzelnen weiterhin so eingerichtet ist, dass sie eine Benutzereingabe zur Einstellung spezifischer Eigenschaften des automatischen Atmosphärenanpassungsverhaltens des Systems (10) empfängt.

10. System nach einem der vorangegangenen Ansprüche, das weiterhin so eingerichtet ist, dass es eine vorher definierte Eingabe empfängt und eine vorher definierte Atmosphäre entsprechend der empfangenen, vorher definierten Eingabe auswählt und entsprechende Steuersignale (24) für die Atmosphärenerzeugungsmittel (26) erzeugt, um die vorher definierte Atmosphäre zu erzeugen.

11. System nach einem der vorangegangenen Ansprüche, das weiterhin so eingerichtet ist, dass es Signale (52) von Personenidentifikationsmitteln (54) empfängt und die empfangenen Signale (52) bei Erzeugen der Atmosphäre in Betracht zieht.

12. Verfahren zur automatischen Erzeugung einer für die soziale Situation und Stimmung in einer Umgebung (12) geeigneten Atmosphäre, wonach:
- ein Ton (161, 162, 163) aus der Umgebung (12) empfangen und ein den empfangenen Ton repräsentierendes Audiosignal (18) erzeugt wird,
- das Audiosignal (18) empfangen und für die soziale Situation und Stimmung in der Umgebung (12) analysiert wird; und
- Steuersignale (24) für ein Atmosphärenerzeugungssystem (26) zur Erzeugung einer auf dem Ergebnis (28) der Analyse des Audiosignals (18) basierenden Atmosphäre automatisch erzeugt werden,
**dadurch gekennzeichnet, dass** der Schritt des automatischen Erzeugens von Steuersignalen (24) für das Atmosphärenerzeugungssystem das Erzeugen von Steuersignalen (24) zur Steuerung eines Beleuchtungssystems (32) umfasst, um eine Beleuchtungsatmosphäre zu erzeugen.

13. Computerprogramm, das imstande ist, das Verfahren nach Anspruch 12 durchzuführen, wenn es von einem Computer ausgeführt wird.

14. Aufzeichnungsträger zur Speicherung eines Computerprogramms nach Anspruch 13.

15. Computer, der so programmiert ist, dass er ein Verfahren nach Anspruch 12 durchführt und eine Schnittstelle zur Kommunikation mit einem Atmosphärenerzeugungssystem umfasst.

## Revendications

1. Système (10) pour créer automatiquement une atmosphère appropriée pour un contexte social et une ambiance dans un environnement (12), comprenant :
- une unité de réception de son (14) adaptée pour recevoir un son (161, 162, 163) à partir de l'environnement (12) et générer un signal audio (18) représentant le son reçu,
- une unité de traitement de signal audio (20) adaptée pour recevoir et analyser le signal audio (18) pour déterminer le contexte social et l'ambiance dans l'environnement (12), et
- une unité de création d'atmosphère (22) adaptée pour générer automatiquement des signaux de commande (24) pour un système de création d'atmosphère (26) pour créer une atmosphère en fonction du résultat (28) de l'analyse du signal audio (18),
**caractérisé en ce que** l'unité de création d'atmosphère (22) est en outre adaptée pour créer automatiquement une atmosphère d'éclairage en générant des signaux de commande (24) pour le système de création d'atmosphère (26) commandant un système d'éclairage (32).

2. Système selon la revendication 1, dans lequel l'unité de traitement de signal audio (20) comprend une unité d'analyse et de classement de contenu audio (42) adaptée pour analyser le contenu audio contenu dans le signal audio reçu (18) et pour classer le contenu audio analysé.

3. Système selon la revendication 2, dans lequel l'unité d'analyse et de classement de contenu audio (42) comprend un algorithme d'extraction de caractéristique et de classement audio (44) adapté pour classer le contenu audio dans au moins une ou plusieurs des classes audio générales suivantes : musiques populaire ; musique classique ; parole ; bruit ; bruit de foule ; silence ; rire,
dans lequel l'algorithme d'extraction de caractéristique et de classement audio (44) est en outre particulièrement adapté pour raffiner un classement en classant davantage une classe audio générale en sous-classes.

4. Système selon une quelconque des revendications 2 à 3, dans lequel l'unité d'analyse et de classement de contenu audio (42) est en outre adaptée pour analyser le contenu audio pour déterminer des informations de présence et/ou expressions verbales et pour classer l'ambiance sociale dans l'environnement en fonction des informations de présence et/ou expressions verbales analysées,
dans lequel l'unité de création d'atmosphère (22) est en outre particulièrement adaptée pour établir une correspondance entre l'ambiance sociale classée et une atmosphère, qui est appropriée pour l'ambiance sociale classée, au moyen d'une table de correspondance (46) contenant des classes d'ambiance assorties à des propriétés d'atmosphère et un contenu d'atmosphère.

5. Système selon une quelconque des revendications précédentes, dans lequel l'unité de création d'atmosphère (22) est en outre adaptée pour créer automatiquement une atmosphère en générant des signaux de commande (24) pour le système de création d'atmosphère (26) commandant un ou plusieurs des systèmes suivants : un système de rendu audio (34) pour générer un audio ; un système d'affichage électronique (36) pour afficher des images et des vidéos électroniques ; un système de génération d'odeur (38) pour générer des odeurs artificielles ; un système de commande de climat (40).

6. Système selon une quelconque des revendications précédentes, dans lequel l'unité de création d'atmosphère (22) est en outre adaptée pour adapter une atmosphère à une dynamique du son (161, 162, 163) reçu avec l'unité de réception de son (14).

7. Système selon une quelconque des revendications précédentes, dans lequel
- l'unité de réception de son (14) est en outre adaptée pour recevoir des sons (161, 162, 163) à partir de différents emplacements (121, 122, 123) dans l'environnement (12) et pour générer des signaux audio (18) représentant les sons (161, 162, 163) reçus à partir des différents emplacements (121, 122, 123),
- l'unité de traitement de signal audio (20) est en outre adaptée pour recevoir et analyser les signaux audio (18) pour déterminer un contexte social et une ambiance aux différents emplacements (121, 122, 123) dans l'environnement, et
- l'unité de création d'atmosphère (22) est en outre adaptée pour générer automatiquement des signaux de commande (24) pour un système de création d'atmosphère (26) pour créer différentes atmosphères aux différents emplacements (121, 122, 123) dans l'environnement en fonction du résultat de l'analyse des différents signaux audio (18) représentant les sons (161, 162, 163) reçus à partir des différents emplacements (121, 122, 123).

8. Système selon une quelconque des revendications précédentes, comprenant en outre :
- un capteur (47) pour détecter une présence humaine dans un emplacement (123) de l'environnement (12) et
- une unité de traitement de signal de capteur (48) adaptée pour déterminer une mesure pour une présence humaine dans l'emplacement détecté (123), dans lequel
- l'unité de création d'atmosphère (22) est en outre adaptée pour générer automatiquement des signaux de commande (24) pour un système de création d'atmosphère (26) pour créer l'atmosphère en fonction de la mesure déterminée pour la présence humaine.

9. Système selon une quelconque des revendications précédentes, comprenant en outre :
- une interface utilisateur (50) adaptée pour recevoir une entrée utilisateur pour permettre un mode automatique du système (10) afin d'obtenir un comportement de réglage d'atmosphère automatique du système (10),
dans lequel l'interface utilisateur (50) est en outre particulièrement adaptée pour recevoir une entrée utilisateur pour régler des propriétés spécifiques du comportement de réglage d'atmosphère automatique du système (10).

10. Système selon une quelconque des revendications précédentes, en outre adapté pour recevoir une entrée prédéfinie et sélectionner une atmosphère prédéfinie correspondant à l'entrée prédéfinie reçue et pour générer des signaux de commande correspondants (24) pour le système de création d'atmosphère (26) afin de créer l'atmosphère prédéfinie.

11. Système selon une quelconque des revendications précédentes, en outre adapté pour recevoir des signaux (52) à partir de moyens d'identification personnelle (54) et pour prendre les signaux reçus (52) en considération lors de la création de l'atmosphère.

12. Procédé pour créer automatiquement une atmosphère appropriée pour un contexte social et une ambiance dans un environnement, comprenant :
- la réception de son (161, 162, 163) à partir de l'environnement (12) et la génération d'un signal audio (18) représentant le son reçu,
- la réception et l'analyse du signal audio (18) pour déterminer le contexte social et l'ambiance dans l'environnement (12), et
- la génération automatique de signaux de commande (24) pour un système de création d'atmosphère (26) pour créer une atmosphère en fonction du résultat de l'analyse du signal audio (18),
**caractérisé en ce que** l'étape de la génération automatique de signaux de commande (24) pour le système de création d'atmosphère comprend la génération de signaux de commande (24) pour commander un système d'éclairage (32) pour générer une atmosphère d'éclairage.

13. Programme d'ordinateur pouvant réaliser le procédé selon la revendication 12 lorsqu'il est exécuté par un ordinateur.

14. Support d'enregistrement stockant un programme d'ordinateur selon la revendication 13.

15. Ordinateur programmé pour réaliser un procédé selon la revendication 12 et comprenant une interface pour la communication avec un système de création d'atmosphère.
